(19) Europäisches Patentamt

European Patent Office

Office européen des brevets

(11) Publication number: **0 290 248 B1**

(12) **EUROPEAN PATENT SPECIFICATION**

(45) Date of publication of patent specification: **30.11.94**  (51) Int. Cl.5: **A61C 7/00**

(21) Application number: **88304055.2**

(22) Date of filing: **05.05.88**

(54) **Orthodontic finishing positioner and method of construction.**

(30) Priority: **05.05.87 US 46087**
**20.07.87 US 75327**

(43) Date of publication of application:
**09.11.88 Bulletin 88/45**

(45) Publication of the grant of the patent:
**30.11.94 Bulletin 94/48**

(84) Designated Contracting States:
**DE ES FR IT NL**

(56) References cited:
**US-A- 2 590 118**
**US-A- 3 407 500**
**US-A- 3 478 429**
**US-A- 3 898 736**

(73) Proprietor: **GREAT LAKES ORTHODONTICS, LTD.**
**199 Fire Tower Drive**
**Tonawanda New York 14150 (US)**

(72) Inventor: **Breads, Peter R.**
**721 West River Road**
**Grand Island New York 14072 (US)**
Inventor: **Abbatte, Gerard P.**
**58 Henley Road**
**Buffalo New York 14216 (US)**
Inventor: **Warunek, Stephen P.**
**104 Wimbledon Court**
**Apartment 4**
**West Seneca New York 14224 (US)**

(74) Representative: **Moir, Michael Christopher et al**
**MATHYS & SOUIRE,**
**10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates generally to a tooth positioner and an associated method of constructing the positioner.

In order to reposition a patient's teeth to a desired orientation, it is known that a positioner constructed of an elastic material and having an appearance resembling a common mouthguard can be operatively positioned about the patient's teeth for urging ones of the teeth toward a predetermined or desired position. It is also known that for the purpose of positively locking the positioner within the patient's mouth, suitable coupling members can be attached to the teeth of a patient for mating and coacting with the positioner. A positioner for use in connection with tooth-mounted coupling members comprising the features defined in the preamble of Claim 1 is shown and described in US-A-3.407.500. In US-A-3.478.429 an orthodontic retainer (as opposed to a positioner) is made of elastomeric material.

It is an object of the present invention to provide a new and improved finishing positioner constructed of elastomer base material having a relatively high resistance to damage by chewing or biting for use on teeth to which coupling members have been attached for coacting with the coupling members to bias preselected ones of the teeth to a predetermined or desired occlusion and an associated method of constructing the positioner.

The invention resides in an orthodontic appliance or positioner and an associated method of construction for realigning maloccluded teeth of a patient to a predetermined orientation, to which teeth are secured coupling members for coacting with the positioner.

According to one aspect, the present invention provides an orthodontic appliance for maloccluded teeth to which are operatively secured coupling members of the type including portions protruding from the surfaces of the teeth, said appliance comprising:

a body constructed of an elastomer base material having an arcuate-shaped portion along which is defined a recess for receiving teeth of one dental arch of the patient, wherein said teeth include maloccluded teeth to which are secured coupling members of the aforesaid type, the recess having walls defining teeth-engaging surfaces shaped generally complementary to the surfaces of the teeth of said one arch when the maloccluded teeth thereof are positioned in a predetermined orientation and having coupling elements each shaped to accept a corresponding protruding coupling member portion when placed thereabout so that when said appliance body is operatively positioned within the patient's mouth and stretched about the teeth of the one dental arch so that the teeth thereof are accepted by the recess of said arcuate-shaped portion and each protruding coupling member portion is accepted by a corresponding coupling element, the stretched body acts to bias the teeth of said one arch toward the predetermined orientation;

characterised in that the body is in one piece; the coupling elements take the form of respective indentations in the body each indentation being in the form of an open-sided or cuplike cavity having an opening shaped generally in conformity to the projected outline or shape of the coupling member which the indentation is to accept and having an interior surface shaped generally complementary to the shape of the coupling member so that when the indentation is operatively stretched about the coupling member the interior surface closely surrounds the coupling member and the edge of the opening of the indentation closely encircles the coupling member; the stretched body being constructed to act directly against the teeth and the coupling member portions in said biasing of the teeth.

The invention also includes a method of constructing an orthodontic positioner for maloccluded teeth located in a preselected one of the upper and lower dental arches of a patient for coaction with teeth-mounted coupling member, said method comprising the steps of:

providing a hardened dental facsimile formed from an impression of the preselected dental arch wherein the dental facsimile includes portions simulating the teeth and a portion of the gum tissue adjacent the teeth of the preselected dental arch and the surfaces of the coupling members are defined by the surfaces of either coupling member-simulating portions of the facsimile formed by the impression or coupling members attached to the teeth-simulating portions of the facsimile;

repositioning teeth-simulating portions of the dental facsimile to a preselected orientation so as to provide a first model of the preselected dental arch having teeth-simulating portions orientated in the same manner as the teeth in the preselected arch are desired to be orientated;

forming the positioner out of a elastomer base material so that said positioner assumes a one-piece body having an arcuate-shaped portion along which is defined a recess having walls defining teeth-engaging surfaces for receiving the teeth-simulating portions of said first model and a series of indentations formed in the material of the body and disposed across respective teeth-engaging surfaces, each indentation being in the form of an open-sided or cuplike cavity having an opening shaped generally in conformity to the projected outline or shape of the coupling member which the indentation is to accept and

EP 0 290 248 B1

having an interior surface shaped generally complementary to the shape of the coupling member so that when the indentation is operatively stretched about the coupling member the interior surface closely surrounds the coupling member and the edge of the opening of the indentation closely encircles the coupling member.

Reference will now be made, by way of example, to the accompanying drawings, in which:-

Figure 1 is a perspective view of an embodiment of a positioner in accordance with the present invention.

Figure 2 is a plan view of the Figure 1 positioner as seen generally from above in Figure 1.

Figure 3 is a cross-sectional view taken about on lines 3-3 of Figure 1.

Figure 4 is a perspective view of a patient's teeth about which the Figure 1 positioner has been designed to be operatively positioned.

Figure 5a is a perspective view of the patient's teeth as shown in Figure 4 but drawn to a slightly larger scale and illustrating a step in preparing the patient's teeth prior to the making of an impression thereof.

Figure 5b is a perspective view of a cap-like body in condition for operative placement about a retaining bracket.

Figure 6 is a perspective view of an amount of impression material being prepared for making an impression of the teeth located in one of the patient's dental arches.

Figure 7 is a perspective view illustrating the Figure 6 impression amount being operatively applied to and pressed about the teeth of the patient's dental arch.

Fig. 8 is a perspective view of a second amount of impression material being positioned upon a matrix fork.

Fig. 9 is a perspective view illustrating the Fig. 8 impression amount being operatively applied to the underside of the Fig. 6 amount which had previously been applied to the teeth as shown in Fig. 7.

Fig. 10 is a perspective view of the cured unitary impression taken of the teeth of the patient in accordance with the steps illustrated in Figs. 5-9 shown removed from the mouth.

Fig. 11 is a perspective view illustrating the application of an uncured die stone material to the Fig. 10 impression for forming a die stone facsimile of the patient's teeth.

Fig. 12 is a perspective view illustrating a preselected one of the teeth-simulating portions of a die stone facsimile formed with the Fig. 10 impression having been cut from the remainder of the facsimile and having its root portion narrowed to somewhat of a V-shape.

Fig. 13 is a perspective view illustrating the application of wax to the teeth-simulating portions when operatively repositioned in the Fig. 10 impression to form a reconstructed facsimile of the patient's teeth.

Fig. 14 is a perspective view of the teeth-simulating portions of Figs. 12 and 13 together with the added wax of Fig. 13 shown mounted upon a base to form a combination wax/stone model of the patient's teeth.

Fig. 15 is a perspective view of combination wax/stone models of the teeth of both the upper and lower dental arches shown operatively mounted within a dental articulator.

Fig. 16 is a perspective view of the articulator-mounted models of Fig. 15 illustrating the repositioning of teeth-simulating portions of the models to preselected orientations.

Fig. 17 is a perspective view of one of the models of Fig. 16 having its teeth-simulating portions arranged in a preselected orientation shown removed from the articulator and being utilized to form an impression of the teeth thereof when the teeth are oriented in the preselected orientation.

Fig. 18 is a plan view illustrating the building of a wax pattern about die stone construction models of the teeth of both the upper and lower dental arches when the teeth therein are oriented in a preselected orientation.

Fig. 19 is a plan view similar to that of Fig. 18 illustrating the wax pattern when completed about the die stone construction models.

Figs. 20 and 21 are perspective views of investment molding equipment being used to form a positioner with the completed wax pattern of Fig. 19.

Fig. 22 is a perspective view illustrating the removal of a molded positioner from the molding equipment of Figs. 21 and 22.

Fig. 23 is a perspective view of an alternative embodiment of the positioner in accordance with this invention.

Fig. 24 is a perspective view of a retaining bracket having an alternative construction to those illustrated in Figs. 5a and 5b and shown operatively positioned upon a tooth.

Fig. 25 is a perspective view illustrating the obtaining of a dental cast of the upper dental arch of a patient.

Fig. 26 is a perspective view of a dental facsimile to which retaining brackets are being mounted.

3

Fig. 27 is a perspective view of the bracket-bearing facsimile of Fig. 26 and a transfer matrix formed from the facsimile.

Fig. 28 is a perspective view of the transfer matrix of Fig. 27 being used to operatively locate the retaining brackets of the bracket-bearing facsimile within the patient's mouth.

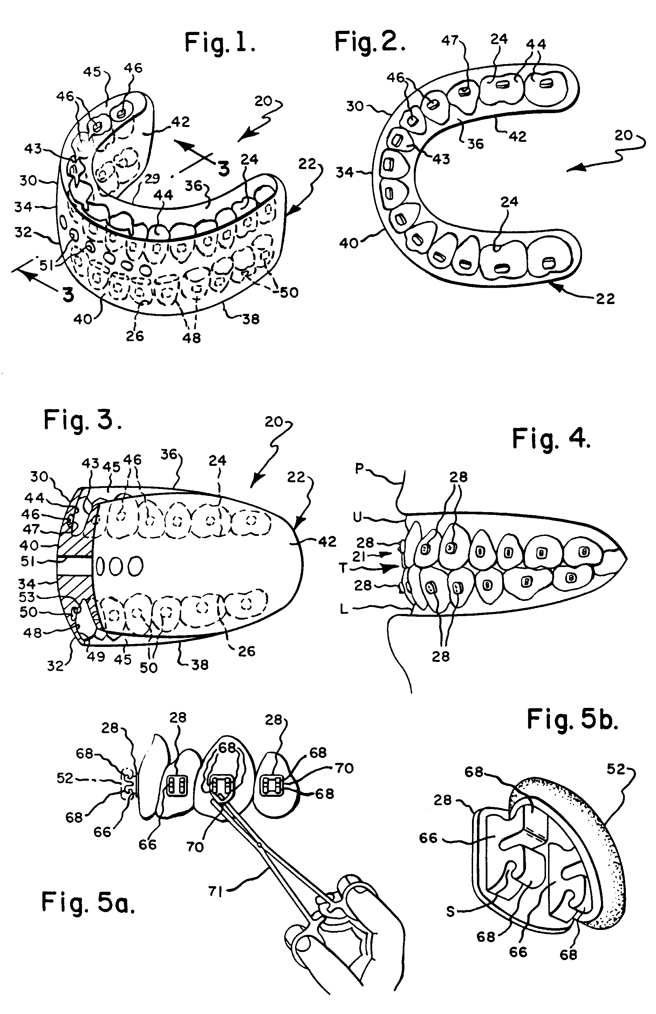

Turning now to the drawings in greater detail and considering first Figs. 1-4, there is shown an orthodontic finishing appliance or positioner, generally indicated 20, in accordance with the appliance of the present invention for repositioning maloccluded teeth T (Fig. 4) of a patient P to a predetermined orientation and to which teeth T coupling members 21 have been attached. Inasmuch as the positioner 20 is a finishing positioner, it is particularly well-suited for repositioning maloccluded teeth after conventional bands and arch wires have been used to initiate treatment. As will be explained in detail hereinafter, the positioner 20 cooperates with the coupling members 21 carried by maloccluded teeth to urge the teeth to the predetermined orientation.

Although the teeth-mounted coupling members 21 can take any of a number of forms in the interest of this invention as will be hereinafter discussed, the coupling members 21 are in the form of retaining brackets 28 of the type commonly used in connection with arch wires (not shown) of orthodontic braces. Therefore, while the ensuing discussion addresses the utilization and/or construction of the positioner 20 about retaining brackets 28, it will be understood that the type of coupling members 21 with which a positioner in accordance with the present invention can be used is not limited to retaining brackets of this type.

The positioner includes a unitary body 22 constructed of an elastomer base material having a pair of teeth-accepting recesses 24,26 for closely and snugly accepting the teeth to which retaining brackets 28 (Fig. 4) are secured. The recesses 24,26 are shaped in conformity to the general contours of the teeth T and brackets 28 when the teeth T are oriented in a predetermined or desired orientation. Therefore, when the positioner 20 is operatively positioned about the maloccluded teeth T, the body 22 is in a stretched or deformed condition and the elasticity of the body 22 biases the teeth T toward the predetermined orientation.

With reference still to Figs. 1-3, the positioner 20 includes means defining a first, or upper, portion 30 and means defining a second, or lower, portion 32 between which is sandwiches a mid-portion 34. Each of the upper, lower and mid-portions 30, 32, 34 are generally arcuate in shape as viewed in the plan view of Fig. 2 so that the arc thereof generally conforms to that of the upper and lower dental arch of the patient P. Furthermore and in the positioner embodiment 20, the unitary body 22 provides each of the means defining the upper portion 30, the means defining the lower portion 32 and the mid-portion 34.

The positioner body 22 defines a top side 36, a bottom side 38 and an outwardly-directed surface 40 and an inwardly-directed surface 42 extending between the top and bottom sides 36,38. The recess 24, mentioned earlier, is defined in the top side 36 of the body 22 is of such shape and size to cooperatively receive the teeth T and retaining blocks 28 of the upper dental arch, indicated U in Fig. 4, of the patient when the teeth T are oriented in a predetermined orientation. More specifically, the recess 24 includes walls 43 defining teeth-engaging surfaces 44 shaped generally complementary to the surfaces of the teeth T of the upper arch when preselected ones of the teeth of the upper arch U are positioned in a corrected or idealized orientation. Furthermore, the recess walls 43 define a series of indentations 46 disposed across the teeth-engaging surfaces 44 wherein each indentation 46 is shaped to nestingly accept a corresponding retaining bracket 28 of the upper dental arch U when operatively positioned thereabout. As best shown in Fig. 3, each indentation 46 is in the form of an open-sided or cuplike cavity having an opening shaped generally in conformity to the projected outline or shape of the retaining bracket 28 which the indentation 46 is adapted to accept and defines an interior surface 47 shaped generally complementary to the general shape of the bracket 28 so that when the indentation 46 is operatively stretched about the bracket 28, the interior surface 47 closely surrounds the bracket 28 and indentation opening or more specifically, the edge thereof, closely encircles the bracket 28.

The recess 26 is defined in the bottom side 38 and in the lower portion 32 of the positioner body 22 and includes walls 49 defining teeth-engaging surfaces 48 shaped generally complementary to the surfaces of the teeth T of the lower dental arch, indicated L in Fig. 4, of the patient when the teeth T therein are positioned in a preselected or corrected orientation. Furthermore, the recess walls 49 define a series of indentations 50 disposed across the teeth-engaging surfaces 48 wherein each indentation 50 has an interior surface 53 is shaped to nestingly accept a corresponding retaining bracket 28 of the lower dental arch L when the indentation 50 is operatively positioned about a bracket 28 wherein the interior surface 53 completely and snugly surrounds the bracket 28.

Each of the recess walls 43 or 49 further defines gum-engaging surfaces 45 adjacent the teeth-engaging surfaces 44 or 48 for engaging a portion of the gum tissue G located adjacent the teeth T when the positioner 20 is operatively worn. The gum-engaging surfaces 45 are shaped generally complementary to the surface of the gum tissue over which the surfaces 45 are adapted to engage so that when the positioner 20 is operatively worn, the gum-engaging surfaces 45 lie comfortably against the gum tissue.

The mid-portion 34 spaces the recesses 24,26 from one another so that when the positioner 20 is operatively positioned within the mouth and the upper and lower teeth T are operatively received by the recesses 24,26, the teeth of the upper and lower dental arches U,L, respectively, are arranged in an open bite relationship. Furthermore, the mid-portion 34 defines a plurality of through-apertures 51,51 extending between the outwardly and inwardly-directed surfaces 40 and 42 to facilitate breathing through the mouth while the positioner 20 is worn by the patient P.

When the positioner 20 is operatively positioned within the mouth so that the body 22 is operatively stretched about the patient's teeth T and brackets 28, each recess 24 or 26 nestingly and operativelyly receives the teeth of the corresponding arch U or L in a relatively snug fit-up relationship and each indentation 46 or 50 nestingly and operatively receives a corresponding retaining bracket 28. Inasmuch as the actual position of the teeth T is not the same as the predetermined, or corrected, orientation of the teeth T, it will be understood that the positioner body 22 is in a stretched or deformed condition when operatively positioned about the teeth T. The elasticity or memory of the body 22 thereby effectively biases the maloccluded teeth T toward the predetermined or preselected orientation as the body 22 attempts to return to its relaxed or undeformed condition.

The elastomer base material of the positioner body 22 is constructed of a material 29 which, when in an uncured condition, possessess a sufficiently low viscosity so that the positioner 20 can be formed in a low pressure injection molding process and which, when in a cured condition, possesses a relatively high resistance to tear. Because the material 29 can be injected-molded when in an uncured condition to form the desired positioner, it is believed that the positioner 20 can be formed much more quickly than can be a conventional positioner of elastomeric material requiring hand layup of the positioner in a piecemeal fashion. Furthermore, because the material, when in a cured condition, possesses a relatively high resistance to tear, the body 22 is less likely to be cut or otherwise damaged if chewed or bitten tightly when worn.

To this end, the material 29 out of which the positioner body 22 is constructed is a silicone rubber possessing a low viscosity when uncured and which, when cured, is a relatively tough, rubber elastomer. Materials found particularly well-suited for use as a material 29 are ones identified within a family of liquid silicone rubbers manufactured by Dow Corning Corporation, Midland, Michigan. Such rubbers currently bear the Dow Corning trade designation SILASTIC and are identified as A/B Medical Grade Liquid Silicone Rubbers. One such liquid silicone rubber (LSR) is available under the designation SILASTIC Q7-4840 wherein the last two digits of the designation number indicate a Shore A durometer of the material of about 40. Two other LSRs in the family possess Shore A durometers of about 50 and 65.

The following table sets forth test values obtained on an exemplary lot of SILASTIC Q7-4840 and set forth in the corresponding product literature published by Dow Corning Corporation.

| | Value | CTM | ASTM |
|---|---|---|---|
| Specific Gravity | 1.12 | 0022 | D792 |
| Durometer Hardness, Shore A, points | 40 | 0099 | D2240 |
| Tensil Strength, psi | 950 | 0137A | D412 |
| Elongation, percent | 425 | 0137A | D412 |
| Tear Strength, die B, ppi | 150 | 0159A | D624 |
| Tissue Culture | No CPE | 0274 | |
| Metals, ppm | | 0368 | |
| Al | 100 max | | |
| P | 50 max | | |
| Fe, Sb, Ge, Mg, Mn, Mo, Pb, Sn, Cr, Bi, Ti, Be, Ca, Ni, Ag, Co, Cu, Zr, Ba, As, Na, V | 10 ea., max | | |

Properties set forth in the foregoing table and listed under "value" were obtained on a 0.19 cm (0.075 - inch) thick ASTM slab cured 5 minutes at 302°F (150°C) and allowed to equilibrate at room temperature for twenty-four hours. Furthermore, properties listed under CTM (Corporate Test Methods) correspond to standard ASTM tests in most instances.

Furthermore, the aforementioned SILASTIC LSR materials, when cured, possess a flexibility, elasticity and resiliency which provide a positioner 20 with strength or memory which urges the patient's teeth to a predetermined orientation with a force within a range of acceptable orthodontic or biological force levels. In other words, a positioner body 22 constructed of any of the aforementioned LSR materials are strong enough to effect a shifting of the patient's teeth when operatively worn thereabout over a period of time and not so strong that the teeth are damagably loosened by the body 22. Furthermore, a positioner 20 constructed of a SILASTIC LSR material possesses relatively slow force decay characteristics and desirable static compression characteristics in that the positioner 20 has a relatively good ability to bounce back to its original undeformed condition after being deformed. The referenced SILASTIC A/B LSRs are comprised of a two-part composition which parts are combined in appropriate portions prior to use. Cure of the composition mixture is initiated by the application of heat, and the rate of cure of the mixture can be controlled by controlling the amount of heat applied to the mixture. For example, the raising of the temperature of a mass of an LSR mixture comprised of SILASTIC Q7-4840 to about 230°F (100°C) cures the mass relatively rapidly.

Still further, the cured SILASTIC material possesses additional characteristics which are desirable in the positioner 20. For example, a positioner 20 comprised of a SILASTIC LSR possesses a desirable stretchability permitting the positioner body 22 to be easily stretched upon the teeth of a patient into an operative condition or removed from the patient's teeth. Additionally, a positioner 20 comprised of a SILASTIC LSR possesses sufficient clarity to render the positioner 20 esthetically appealing. This latter feature is advantageous when considering the fact that the positioner is to be worn within the mouth. Further still, the SILASTIC LSR materials are biocompatable rendering the positioner 20 biocompatable, as well.

In accordance with current product literature available from Dow Corning Corporation and relating to the SILASTIC material, the SILASTIC material is claimed in United States patents 3,445,420 and 4,162,243. Patent 4,162,243 describes a silicone elastic composition which is extrudable and which cures to a high strength, high durometer silicone elastomer. In view of the similarity of characteristics possessed by the positioner 20 comprised of a SILASTIC LSR and the advantages of the silicone elastic compositions set forth in patent 4,162,243, it is believed that of patents 3,445,420 and 4,162,243, the composition of the SILASTIC LSR is disclosed in at least patent 4,162,423.

In accordance with the disclosure of patent 4,162,234, a SILASTIC LSR is believed to be comprised of a mixture of a triorganosiloxy endblocked polydimethylsiloxane fluid, a reinforcing amphorous silica and a fluid organohydogensiloxane and a platinum catalyst.

Patent 4,162,243 suggests, by way of example, that the triorganosiloxy endblock polydimethylsiloxane fluid is either dimethylvinylsiloxy or methylphenylvinylsiloxy and exists in the mixture in about 100 parts by weight. Furthermore, the reinforced silica has a surface area of greater than 100 meters per gram, and exists in the mixture in about 20 to 60 parts by weight. The fluid organohydrogensiloxane consists essentially of units selected from a group consisting of methylhydrogensiloxane, dimethylsiloxane, dimethyl-hydrogensiloxy, trimethylsiloxy and $SiO_2$ units. A platinum catalyst inhibitor can be optionally added to the mixture to increase its shelf life. For a more detailed description of the silicone elastomer composition described in patent 4,162,243, reference may be had to patent 4,162,243.

An advantage provided by the positioner 20 relates to its ability to grasp the maloccluded teeth T for the purpose of transferring elastic force potential from the positioner 20 to the teeth. To this end, the indentations 46,50 of the teeth-engaging surfaces 44 and 48 are stretched about so as to nestingly accept the retaining brackets 28 and the remainder of the teeth-engaging surfaces 44 and 48 are stretched about so as to nestingly accept the crowns of the teeth T when the positioner 20 is operatively positioned within the mouth. Hence, the indentations 46,50 coact as male and female couplers, respectively, to enhance the securement of the body 22 to the teeth T and cooperate to provide an effective grasping of the brackets 28 by the body 22. Such an effective grasping of the brackets 28 is believed to enhance the transfer of elastic force potential from the positioner 20 to teeth T and to thereby efficiently utilize the elasticity of the positioner body 22.

The method of the present invention includes the steps involved in constructing the positioner 20. Initially, the patient's mouth is prepared for the making of impressions of the teeth located in the upper and lower dental arches from which die stone models of the teeth are formed in a manner hereinafter described. If the patient is wearing the arch wires of his orthodontic braces, the arch wires are removed to suitably expose the retaining brackets 28. Each bracket 28, as best shown in Figs. 5a and 5b, includes a block-like body 66 suitably glued to its corresponding tooth and substantially centrally of the buccal surface of the tooth. Furthermore, each bracket 28 includes four tie wings 68,68 protruding from the corners of the body 66 as shown in Figs. 5a and 5b so that an undercut or spacing, indicated S, is defined between the tie wings 68,68 and the base of the bracket body 66. It will be understood, however, that an alternative bracket which is functionally comparable to the illustrated bracket 28 may include a number of tie wings other than four such as, for example, two.

Inasmuch as each tie wing 68 or 68 of the brackets 28 is relatively sharp, each bracket 28 is then suitably covered so that impression material subsequently applied about the teeth T and brackets 28 is not appreciably torn or damaged upon removal of the impression material from the teeth T by the bracket tie wings 68,68 and so that impression material which is subsequently applied to the brackets 28,28 in a manner hereinafter described does not become lodged within the spacing S. It has been found that the brackets 28 can be suitably covered for the aforesaid purposes by at least two techniques. For example and with reference to Fig. 5a and 5b, the brackets 28,28 may be suitably covered by a cap 52 having a cup-like body adapted to be stretched into place about a bracket 28 so as to cover all four tie wings 68,68. The cup-like body of the cap 52 has an outer configuration which is somewhat rounded in shape so that when operatively stretched about a bracket 28 as illustrated in phantom in Fig. 5a, the cap 52 effectively provides the sharp corners of the tie wings 68,68 with a smooth, rounded covering and thickens the bracket body 66. An example of such a cap 52 is available under the trade designation Hug Cap from Kreative Koncepts, Inc. of Hinsdale, Illinois.

The brackets 28,28 may also be suitably covered by tightly wrapping the block-like body 66 of each bracket 28 with an elastic or rubber band 70. In such an instance and as illustrated in Fig. 5a, rubber band 70 can be wrapped about a corresponding bracket 28 by means of an appropriately-shaped instrument such as a hemostat 71. The resultant rubber band wrapping effectively thickens the body 66 to thereby fill the spacing S and provides each bracket body 66 with a built-up outermost surface so that the outermost edges of the tie wings 68,68 are substantially even with the outermost surface of the wrapped rubber band 70 and so that only the generally-projected outline or shape of each bracket 28 is presented for impression-making purposes. Furthermore, the brackets 28,28 can be suitably covered by means of an elastic-like ring of the type available under the trade designation G Modules and available from Unitek Corp., Monrovia, California. Such a ring is adapted to be stretched about so as to encircle the body 60 of the bracket 28 and be received by so as to substantially fill the retainer wire-accepting slot extending laterally across the bracket 28.

If the patient's orthodontic braces also include buccal tubes (not shown), it is necessary during the preparation of the patient's mouth to either remove the buccal tubes from the teeth or to fill the tubes so that impression materials subsequently applied to and around the tubes cannot become lodged therein. It has been found that wax or a wax-like lip balm can be used to suitably fill the buccal tubes.

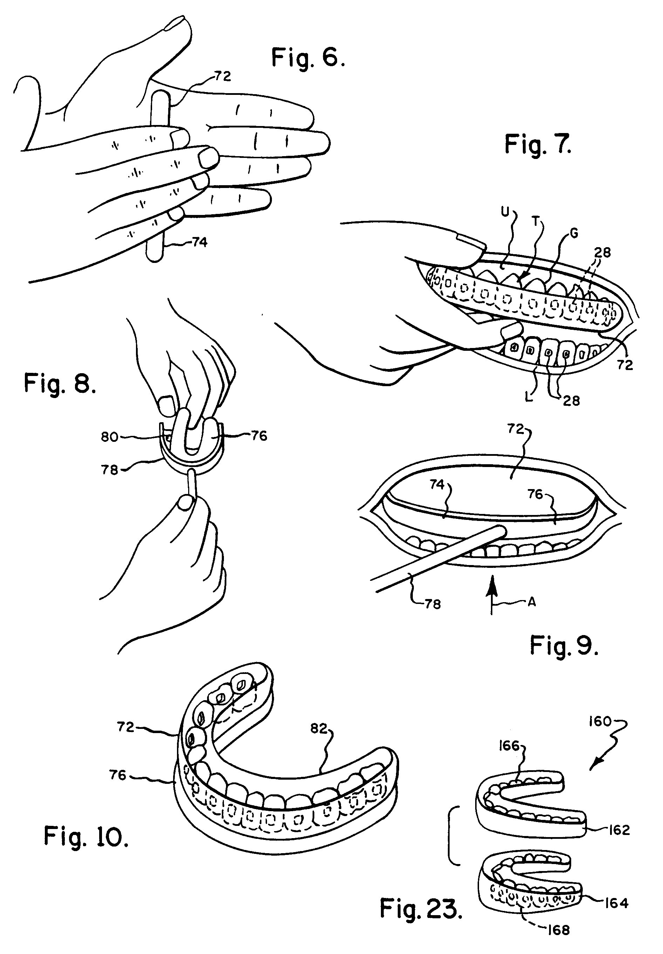

Once the patient's mouth has been suitably prepared as aforedescribed, and with reference to Figs. 6 and 7, an impression is formed of a preselected one of the patient's dental arch, such as the upper arch U, with which a die stone facsimile or model of the arch is subsequently formed. Such an impression can be formed by providing an impression material, indicated 74, for accurately capturing the shape and contour of the teeth T and brackets 28 when applied thereto. An example of acceptable impression materials include that which is available under the trade designation Bondo Sil from Ortho-Bonding Co., Del Ray Beach, Florida. Bondo Sil is comprised of a base putty and a liquid catalyst and is prepared by initially spreading an amount of base putty onto a mixing pad or glass and scored so as to form crisscrossing lines thereacross. The liquid catalyst is then applied over the crisscrossing lines, and the amount 72 is folded and kneaded briskly to obtain homogeneity.

If the impression material 74 is Bondo Sil and with reference to Fig. 6, a first amount 72 of impression material is provided and then rolled between the hands, as shown in Fig. 6, to conform the amount 72 to somewhat the shape of an elongated cylinder. Inasmuch as the cylindrically-formed amount 72 will be subsequently layered or pressed upon the crowns of the teeth T of the upper arch U, the length of the cylindrically-formed amount 72 is about equal to that of the arc of the upper arch U. At that point, the cylindrically-formed amount 72 of material 74 is bent in conformity to the arc of the upper dental arch U, inserted within the mouth and pressed upon the teeth T. The amount 72 is then shaped about the teeth T and brackets 28 in the upper dental arch U by manually pushing and thereby moving the impression material 74 about, so as to cover, the surfaces of the teeth T, retaining brackets 28 and a portion of the gum tissue G adjacent the teeth T. In practice, it is preferred that the impression material 74 be forced to overlie all of the gum tissue G within .25 inches (.6 cm) of the teeth T so that the shape of a substantial portion of the gum tissue G is accurately captured by the impression material 74. The impression material 74 is then permitted to cure by, for example, the passage of an appropriate period of time while the impression material 74 remains in position about the teeth. A first amount of Bondo Sil commonly requires about four to five minutes of setting time.

While the first amount 72 of Bondo Sil is operatively pressed about the teeth T as aforedescribed, portions of the first amount 72 may rupture to thereby expose some of the teeth T or brackets 28 through the first amount 72. If this occurs, the exposed teeth T or brackets 28 need not be covered prior to the curing of the first amount 74.

With reference to Fig. 8, a second amount, indicated 76, of Bondo Sil is then prepared in a manner identical to that of the first amount 72, as described above, and conformed or rolled with the hands into somewhat the shape of an elongated cylinder having a length which is about equal to the length of the arc of the upper dental arch U. A matrix fork 78 is then provided and the second amount 76 is then pressingly applied to one side, or the upper side as shown in Fig. 8, of the fork 78 so that the second amount 76 extends substantially along the entire length of the arc of the fork 78. The matrix fork 78 defines a series of holes 80(only one shown in Fig. 8), as shown, and the operative pressing of the amount 76 onto the fork 78 as aforedescribed commonly forces portions of the second amount 76 to protrude through the holes 80 from the upper side of the fork 78.

With reference to Fig. 9, the second amount 76 of Bondo Sil is then applied to the first amount 72 by inserting the fork 78 into the mouth and pressing the amount 76 against the teeth T of the upper arch U in the direction of the arrow A. The second amount 76 is thereby pressed in underlying relationship with the first amount 72 so that each end of the arc of the second amount 76 generally corresponds with an end of the arc of the first amount 72 and so that the first and second amounts 72 and 76 effectively bond or adhere to one another. Excess material of the second amount 76 rendered available from the pressing of the second amount 76 upon the first amount 72 is then be spread or smeared across the first amount 72 so as to cover any exposed teeth T or brackets 28. The second amount 76 is then permitted to cure so that the first and second amounts 72,76 collectively form the desired impression, indicated 82 in Fig. 10, of the upper dental arch U. The resultant unitary impression 82 is relatively soft and rubbery and is substantially strengthened by the inclusion of the second amount 76 of impression material 74.

Upon curing of the second amount 76 of Bondo Sil, the matrix fork 78 is removed from the mouth and the impression 82 is removed from the teeth T. Commonly, the removal of the impression 82 from the mouth necessitates a stretching of the impression material so that the impression 82 clears the details of the teeth T and retaining brackets 28. Because the brackets 28 have been covered as aforedescribed, the likelihood that the impression 82 will tear or be otherwise damaged from the sharp corners of the tie wings 68 is substantially reduced. Once removed from the teeth T, the impression 82 should be checked to be sure that no undesirable voids have been formed therein. Preferably, the impression 82 should also be replaced upon the matrix fork 78 and the aforedescribed protruding portions of the second amount 76 repositioned through the matrix fork holes 80,80 to ensure that there is no distortion of the impression 80 when repositioned upon the fork 78. Inasmuch as the impression 82 is to provide an accurate impression of the detail of the teeth T and brackets 28, any impression inaccuracies or damage which would subsequently prevent the obtaining of an accurate model of the teeth and brackets 28 formed from the impression 82 would require that a new and replacement impression be taken.

As an alternative to using Bondo Sil as the impression material 74, an alginate composition of the type commonly used to form alginate impressions, can also be used to form a suitable impression of the patient's dental arch. Such steps in the formation of an alginate impression of a patient's dental arch are well known in the art. Briefly, however, and with regard to the making of an alginate impression of the bracketed teeth T of the patient P, an amount of uncured alginate composition is spatulated into a suitably-sized impression tray, the impression tray is inserted into the mouth and the alginate composition appropriately seated unto the teeth T. Because the uncured alginate composition is relatively liquid, the alginate composition flows around the teeth and brackets to effectively capture the detail of the shape and contour of the teeth T and brackets 28. The alginate composition is subsequently permitted to set and then removed from the teeth by gently rocking the impression tray to break the suction seal commonly formed between the teeth and alginate material and subsequently directed off of the teeth and out through the mouth. As was the case with the Bondo Sil impression, the alginate impression is not appreciably damaged to the extent rendering the impression unusable as the impression is pulled over the brackets 28 upon removal of the impression from the mouth.

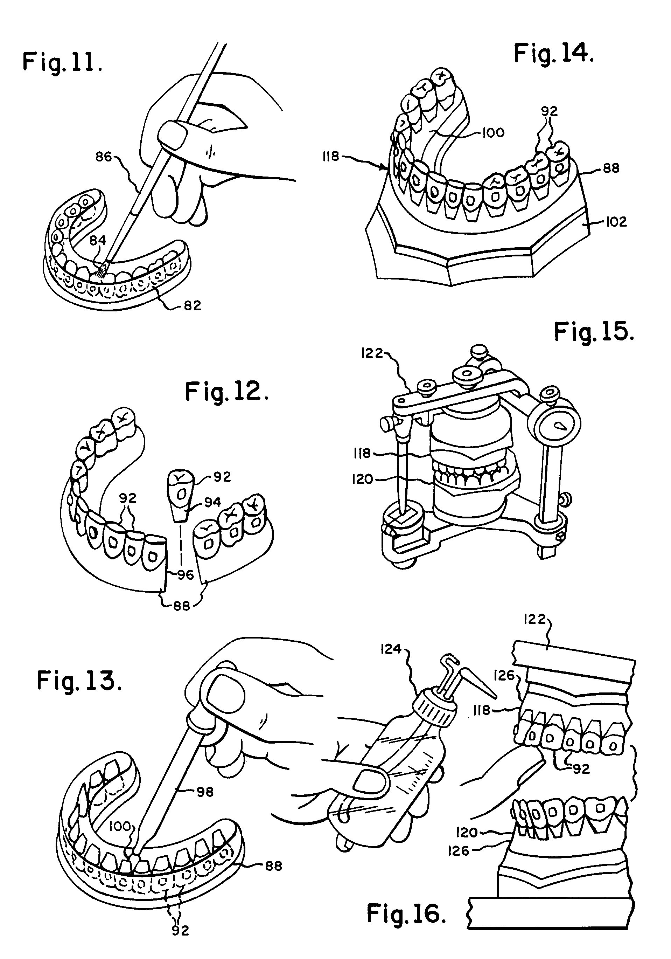

With reference to Fig. 11, a die stone composition, indicated 84, and in an uncured condition is provided and placed within the impression 82 to form a hard, die stone facsimile of the patient's teeth T, retaining brackets 28 and gum tissue G. An example of a die stone material out of which the die stone facsimile can be formed is available under the trade designation Vel Mix Stone from Kerr/Division of Sybron Corp., Romulus, Michigan. Prior to being placed within the impression 82, the die composition 84 is vacuum-spatulated to remove air bubbles and is subsequently placed within the impression 82 by means of a brush 86 and a spatula (not shown). Initially the bristles of the brush 86 are used to scoop amounts of the composition 84 from its container and brush-apply the composition amounts to the impression 82 until the teeth-simulating portions of the impression 82 are filled with the composition 84. The remainder of the impression 82 is then filled with composition 84 as a spatula is used as a scoop. The die stone composition 84 is then permitted to cure to the desired hardened condition. To maximize model detail, the die stone composition 84 is preferably cured in a pressure vessel in room temperature. The hardened facsimile, indicated 88 and shown inverted in Fig. 12, is then removed from the impression 82 by stretching the impression 82 over and off of the detail of the facsimile 88. Inasmuch as the impression 82 is used again during the construction of the positioner 20 as will be described hereinafter, care should be taken during the removal of the impression 82 from the facsimile 88 so as not to destroy the impression 82.

With reference still to Fig. 12, the portions of the facsimile 88 simulating the teeth T and which are desired to be repositioned to a predetermined orientation are each separately cut or sawed from the remainder of the facsimile 88. In the facsimile 88 and as exemplified by the tooth-simulating portion 92 shown isolated in Fig. 12, the portions 92,92 of the facsimile 88 simulating the anterior and positioner teeth of the upper dental arch U are each cut from the remainder of the facsimile 88 in the dental interproximal area thereof and shaped in the root area thereof so that each tooth-simulating portion has a V-shaped or wedge-like base 94. To separate each portion 92, a cut is initiated along the desired path and the facsimile 88 is broken in two along the initiated cut, and the shaping of the root area of each portion 92 can be performed by means of a cutting disk which is mounted on a bench lathe.

Once the portions 92,92 are separated from one another and shaped as aforedescribed, each portion 92 is repositioned in the unitary impression 82 (Fig. 10) in the location therein at which the corresponding portion 92 was formed when the facsimile 88 was made. Because the contours of the tooth of each portion 92 was formed in accordance with the contours of the interior walls of the impression 82, the portions 92,92 engage the impression walls so that the walls of the impression 82 effectively support the portions 92,92 in an upright condition in the impression 82 as shown in Fig. 13.

With reference still to Fig. 13 and with cutout portions 92,92 repositioned within the impression 82, wax, indicated 100, is then warmed and applied, by means of a dropper 98, within the impression 82 so that the V-shaped base 94 of each portion 92 is surrounded by wax 100. Once the wax 100 is permitted to cool, the portions 92,92 are thereby secured therein. Inasmuch as the wax 100 is intended to simulate gum tissue which can be manipulated in a manner hereinafter described, it is preferred that the portions 92,92 be covered with wax to a depth of about two to three millimeters. The warm wax 100 is thereafter permitted to cool, and the remainder of the impression 82 is filled with an uncured die stone composition. The surface of the wax 100 which is intended to be overlain by the subsequently-applied die stone composition is preferably roughened or grooved so that the overlying die stone forms an effective bond with the underlying wax.

The die stone composition is added to the impression 82 so that the reconstructed facsimile, or combination wax/stone model 118 (Fig. 14), has sufficient bulk out of which a mounting base can be formed. To form the mounting base, indicated 102 in Fig. 14, the die stone composition is liberally applied atop the wax 100, permitted to cure, removed from the impression 82 with the wax 100 and teeth-simulating portions 92 attached thereto, and subsequently trimmed with a model trimmer to the desired shape. The resultant wax/stone model 118 is, in essence, a reconstructed facsimile of the patient's upper dental arch U.

In the manner in which the wax/stone model 118 was constructed to form a model of one of the upper dental arch U (Fig. 4), a second wax/stone model is formed of the other dental arch L. Briefly, an impression is made of the teeth T and retaining brackets 28 of the lower dental arch L, a die stone facsimile is formed from the impression, the teeth-simulating portions of the facsimile are separated from and repositioned in the impression of the lower arch L, and a reconstructed facsimile of the upper arch L is formed by applying wax within the lower arch impression and liberally applying an uncured die stone composition to the applied wax. The die stone is thereafter permitted to cure to a hardened condition, the reconstructed facsimile including die stone teeth-simulating portions, overlying wax and the liberally-applied die stone composition is removed from the lower arch impression and the liberally-applied die stone composition is trimmed to form a base of desired shape. The reconstructed facsimile thereby provides the combination wax/stone model 120 (Fig. 15) simulating the teeth, brackets and gum tissue of the lower dental arch L.

As shown in Fig. 15, box wax/stone models 118,120 are then operatively positioned within a dental articular 122. To ensure the proper index or bite relationship between the models 118,120, a wax bite and a maxilliary case are made of the patient's mouth and appropriate adjustments are made to the articular 122 in accordance with the recorded wax bite and maxilliary cast and in accordance with standard face bow transfer techniques. The methods and procedure for obtaining a wax bite and maxilliary cast of the patient and subsequently utilizing the cast to operatively position models of the patient's teeth in an articulator 122

9

are well known in the art.

In accordance with the present invention and with reference to Fig. 15, the teeth-simulating portions of the wax/stone models 118,120 are then reset to a desired orientation in accordance with a predetermined or prescribed arrangement. To this end, the portion of the wax 100 which surrounds a tooth-simulating portion desired to be moved is softened, as by brush-flaming the wax with an alcohol torch 124, and then the tooth-simulating portion is manually moved to the desired or preselected orientation. Once moved to the desired orientation, the tooth-simulating portion is carefully released so that the tooth-simulating portion does not shift or otherwise move from the desired orientation. Every tooth-simulating portion of each model 118 or 120 which is desired to be repositioned to a desired orientation is individually shifted in the aforedescribed manner. Upon completion of the repositioning of the teeth-simulating portions, the gum-simulating portion, indicated 126, of the wax/stone models 118,120 are built up and/or smoothed with wax as necessary to provide the models with the appearance of a healthy gum anatomy.

With the models 118,120 positioned within the articulator 122 so that the teeth-simulating portions are spaced a considerable distance apart, a relatively thick layer or wafer of wax is then inserted between the models and a reference wax interbite is taken to preserve the bite formation 118,120 of the models at a preselected vertical opening. It has been found that a vertical opening of the articulator within the range of about five to seven millimeters is satisfactory for purposes of this invention.

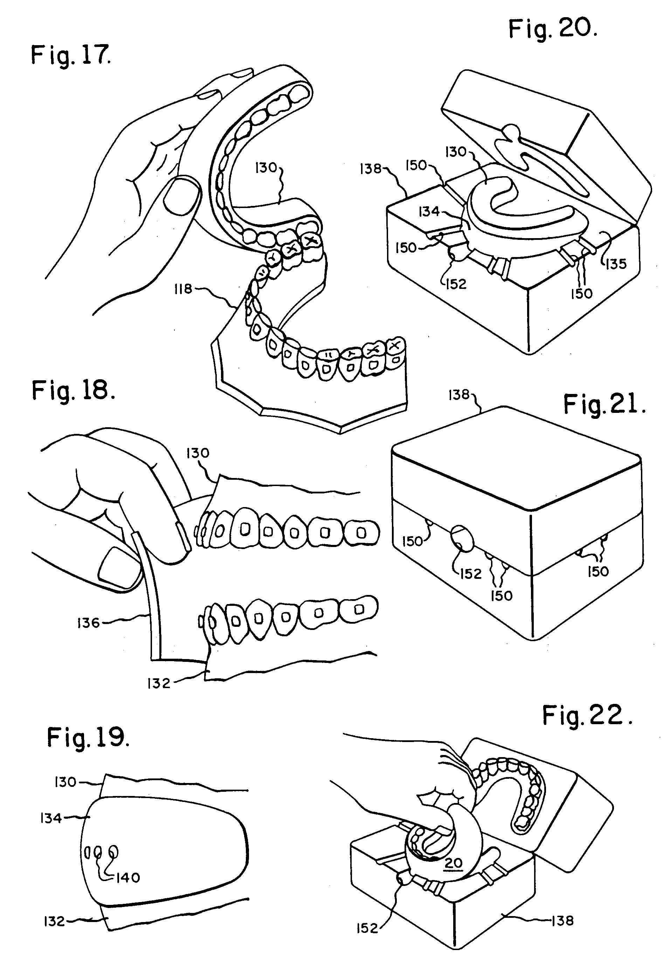

The models 118, 120 are then removed from the articulator 122 and duplicated in die stone. The steps involved in duplicating the models 118,120 in die stone include steps identical to those outlined above in connection with the obtaining of a die stone model of a patient's teeth. For example and in order to form a first construction model of one wax/stone model 118, an amount of Bondo Sil impression material is prepared and conformed into the shape of a cylinder, and the cylindrically-shaped amount is then placed upon the crowns of the teeth-simulating portions of the model 118 and pressed thereabout to shape the impression material about the detail of the teeth and retaining brackets simulated therein. The first amount of Bondo Sil is thereafter permitted to cure and a second amount of Bondo Sil impression material is thereafter applied in an overlying relationship with the cured first amount by means of a matrix fork. The second amount of impression material is thereafter permitted to cure, and as shown in Fig. 17, the cured impression, indicated 130, is removed from the wax/stone model. A uncured die stone composition is then brushed and spatulated within the formed impression 130 and permitted to cure to provide a hardened die stone construction model 132 (Fig. 18) of the wax/stone model 118. The construction model 132 is thereafter removed from the impression 130.

It will be understood that an impression can be formed of the wax/stone model 118 with an alginate composition in the manner outlined above in connection with the obtaining of an impression of the patient's upper dental arch for the purpose of forming the die stone construction model 132 of the wax/stone model 118. Briefly, an amount of alginate composition is seated about the teeth-simulating portions of the wax/stone model 118 and permitted to cure.

Upon completion of the first construction 132, a second construction model 132 (Fig. 18) is formed from the other wax/stone model 120 by forming the impression thereof with impression material and forming the die stone construction model 132 with the formed impression.

With reference to Figs. 18 and 19, the construction models 130,132 are thereafter used as a base or standard upon which a wax pattern 134 (Fig. 19) of the desired finishing positioner is formed. More specifically, the previously formed wax interbite taken while the wax/stone models were operatively mounted within the articulator 122 is operatively placed in overlying relationship with the construction model 130 and the construction model is operatively positioned upon the wax interbite. The resulting arrangement between the construction models 130, 132 simulates the previously-obtained relationship between the wax/stone models 118, 120 mounted within the articulator. To secure the relationship between the construction models, the peripheral edges of wax interbite are luted, or sealed with a heated instrument, to the construction models 130,132.

As illustrated in Fig. 18, additional wax is then applied to the inside and outside surfaces of the construction models in the form of heated wax sheets 136 (only one shown) to complete the wax pattern 134 (Fig. 19) of the positioner 22. If desired, the peripheral design of the positioner can be penciled or outlined upon the construction models to provide a visual border for the build-up of wax, and holes 140 can be carved into the wax pattern 134 as shown in Fig. 19 to provide breathing holes 51,51 (Fig. 1) in the desired positioner 22.

Upon completion of the wax pattern 134, the construction model 130,132, with the wax pattern 134 positioned thereabout, is used to mold the positioner 22. Such molding can be performed with investment molding equipment including an injection-type flask 138 illustrated in Fig. 20 and carried out by molding techniques which are well known in the art. Briefly and with reference to Figs. 20-22, the construction models 130,132 and wax pattern 134 are operatively positioned in the injection-type flask 138, and a plaster investment 135 is poured around the models 130,132 and pattern 134. The wax pattern 134 is boiled out to define a mold cavity within the flask 138, and the wax pattern 134 is replaced with uncured elastomer base material, such as the aforementioned Dow Corning Q7-4840, injected into the mold cavity. After permitting the elastomer base material to cure to form the positioner 22, the positioner is removed from the flask 138 and finished, as by trimming with scissors and/or smoothing with a coarse wheel mounted in a bench lathe chuck, to remove material flash from vents and sprue of the mold. The finished positioner 22 is then ready for insertion into the patient's mouth.

To facilitate the investment molding of the positioner 22, it has been found that when investing the flask 138 with plaster, the flask be initially filled only to a height equal to about one-half the height of the wax pattern 134 when positioned within the flask 138. The investment is then allowed to set, and a separator is spread thereover before the second half of the investment is poured. The resultant mold or casting formed upon filling the remaining one-half of the flask 138 with investment is comprises of two mold halves. Furthermore, for purposes of permitting air to escape during the injection of the uncured elastomer base material, it is preferred that the mold cavity be vented by means of scored grooves 150 (Fig. 20) to the edge of the investment. A trench 152 is thereafter carved in the plaster to provide the main sprue through which elastomer is injected into the mold cavity. Still further, for purposes of preparing the mold cavity after boiling out the wax pattern 134, the mold halves are preferably dehydrated in a convection oven at about 66°C (150° Fahrenheit) for about two hours. After dehydration, an alginate base separator is applied to the molds, and the mold halves are secured and ready for injection.

With injection molding completed, the elastomer base material, and in particular, Dow Corning Q7-4840 is cured by placing the filled mold within a heated, dry pressure vessel maintained at about 171°C (275° Fahrenheit) and leaving the mold in the vessel for about three hours. The mold is then removed from the vessel and permitted to bench cool for about twenty minutes. The mold halves are then separated by hand to permit access to the molded positioner 22.

Although the positioner 20 of Figs. 1-3 has been shown and described as including breathing holes 51,51 defined in the mid-portion 34 of the positioner 20, it will be understood that a positioner in accordance with the present invention need not have such holes.

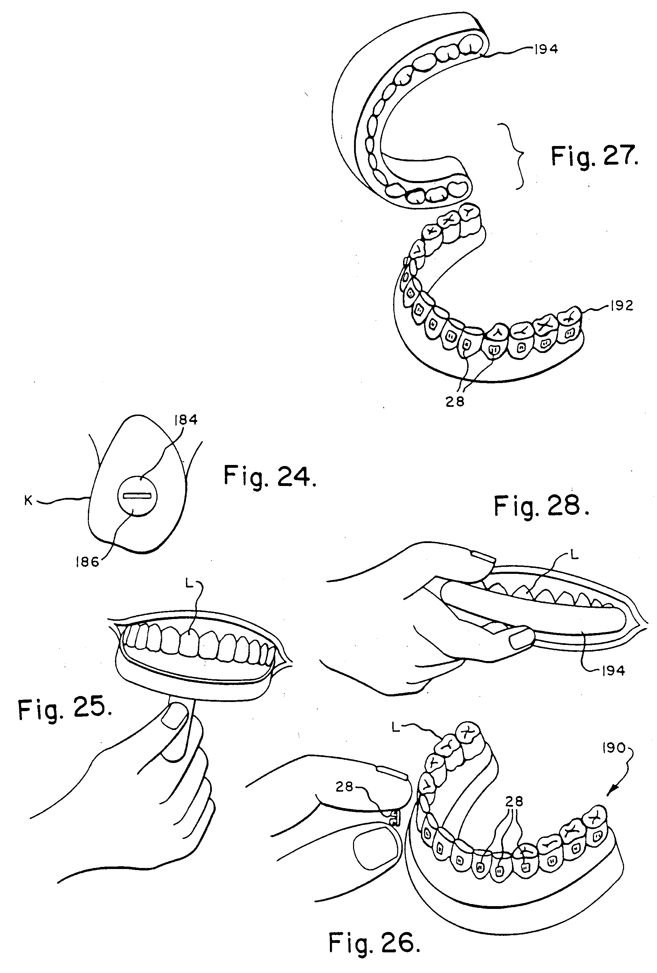

Furthermore, inasmuch as the positioner 20 of Figs. 1-3 is a full positioner in that it is adapted to receive the teeth and brackets of both the upper and lower arch of the patient, it will be understood that a positioner in accordance with the present invention can be a two-part or split positioner wherein each part is adapted to closely receive the teeth and brackets of a corresponding one of the dental arches. For example, there is shown in Fig. 23 a split positioner 160 comprised of two body parts 162 and 164, each having a recess 166 or 168, respectively, adapted to closely receive the teeth of a corresponding dental arch and urge the teeth to a predetermined occlusion when operatively placed thereabout. The steps involved in constructing the split positioner 160 are the same as those involved in constructing the positioner 20 of Figs. 1-3 through the steps of providing construction models of the wax/stone models. Separate wax patterns are thereafter built upon each construction model to yield a pair of pattern-bearing construction models. Preferably, the wax patterns are indexed with one another to ensure proper fit-up of the resultant positioner parts within the mouth. Each construction model, with its corresponding wax pattern, is then used to investment mold a corresponding one of the parts 162 or 164.

Yet still further, although the steps of the aforedescribed method embodiment illustrated in Figs. 5a and 5b and involving the covering or wrapping of the brackets 28,28 may, in the case of some types of brackets, be eliminated in the broader aspects of the method of this invention. For example, there is illustrated in Fig. 24, a coupling member 184 in the form of a bracket 186 operatively secured to a tooth K. Such a bracket 186, available from Kreative Koncepts Inc., Hinsdale, Illinois under the trademark designation Lo-Show Esthetic Brackets, possesses no sharp edges which could damage an impression upon removal of the impression therefrom or defines any undercut in which impression material could become lodged.

Further still, although the steps illustrated in Figs. 6-12 involved to construct a die stone facsimile 88 of the patient's upper arch including a step of applying impression material directly to the teeth and brackets when positioned within the mouth, alternative steps can be employed for obtaining the die stone facsimile. For example and with reference Figs. 25-28, there are illustrated alternative steps for obtaining a coupling member-bearing die stone facsimile 192 (Fig. 27) for a set of teeth L (Fig. 25) of a patient's upper dental arch to which coupling members have yet to be attached and for which a positioner in accordance with the present invention is desired to be fabricated. To obtain the facsimile 192, a dental impression or cast of the teeth L is initially obtained in the manner illustrated in Fig. 25, and the obtained dental impression is used to build a die stone facsimile 190 (Fig. 26) of the teeth L. The dental cast is constructed of plaster, and the steps involved in obtaining such an impression and subsequently forming a dental facsimile are well known in the art. Accordingly, a detailed discussion of such steps are believed to be unnecessary. Coupling members such as brackets 28,28, are then attached as shown in Fig. 26 to the teeth-simulating portions of the facsimile to provide the coupling member-bearing facsimile 192 (Fig. 27). The coupling members 28 are attached to the facsimile 192 with a temporary glue or wax and are attached at locations thereon corresponding to the locations upon the teeth L to which coupling members 192 are desired to be attached.

With reference still to Fig. 27, a transfer matrix 194 is then formed by means of a Bondo Sil impression of the coupling member-bearing facsimile 192. The Bondo Sil impression, when cured and removed from the facsimile 192, is the transfer matrix 194. Subsequently, the coupling member-bearing facsimile 192 is used as a standard or guide for the construction of a wax/stone model having teeth-simulating portions therein reset to a desired orientation. For example, the teeth-simulating portions of the facsimile 192 can be either separated and repositioned in accordance with the steps illustrated in Figs. 12-16 to obtain the desired die stone facsimile or the facsimile 192 can be duplicated in die stone and then the teeth-simulating portions of the duplication can be separated and repositioned in accordance with the steps of Figs. 12-16. The desired positioner is thereafter formed in conformity to the shape of the coupling member-bearing facsimile 192 by, for example, the steps illustrated in Figs. 17-22.

When the facsimile 192 is no longer needed for positioner-forming purposes, the coupling members 28,28 are removed from the facsimile 192 and transferred to the matrix 194. By means of the matrix 194, and with reference to Fig. 28, the brackets 28,28 are transferred to the teeth L of the patient and cemented in place. The former positoner can then be positioned about the teeth L for operative coaction with the brackets 28,28. For a more detailed description of the steps involved in the indirect transfer of coupling members to a patient, reference can be made to U.S. patent 3,738,005.

It will be understood that numerous modifications and substitutions can be had to the aforedescribed embodiments without departing from the scope of the invention. For example, although the material out of which the positioner is constructed has been described as an elastomer base material providing the body with a degree of flexibility, resiliency and elasticity, it will be understood that the durometer or firmness of the elastomer base material may be within a range of durometer levels. In some teeth-repositioning applications, for example, it may be desirous to move teeth to an ultimately-desired orientation during two stages wherein teeth are moved from an initial maloccluded orientation to an intermediate orientation by means of a first positioner and the teeth are moved from the intermediate orientation to the ultimately-desired orientation by means of a second positioner. In such applications, the durometer of the first positioner may be different from the durometer of the second positioner. Accordingly, the aforedescribed embodiments are intended for the purposes of illustration and not as limitation.

## Claims

1. An orthodontic appliance (20) for maloccluded teeth to which are operatively secured coupling members (21) of the type including portions protruding from the surfaces of the teeth, said appliance comprising:

a body (22) constructed of an elastomer base material having an arcuate-shaped portion along which is defined a recess (24,26) for receiving teeth (T) of one dental arch (U,L) of the patient, wherein said teeth include maloccluded teeth to which are secured coupling members (21) of the aforesaid type, the recess having walls (43,49) defining teeth-engaging surfaces (44,48) shaped generally complementary to the surfaces of the teeth of said one arch when the maloccluded teeth thereof are positioned in a predetermined orientation and having coupling elements (46) each shaped to accept a corresponding protruding coupling member (28) when placed thereabout so that when said appliance body is operatively positioned within the patient's mouth and stretched about the teeth of the one dental arch so that the teeth thereof are accepted by the recess of said arcuate-shaped portion and each protruding coupling member portion is accepted by a corresponding coupling element, the stretched body acts to bias the teeth of said one arch toward the predetermined orientation;

characterised in that the body (22) is in one piece; the coupling elements (46) take the form of respective indentations in the body each indentation being in the form of an open-sided or cuplike cavity having an opening shaped generally in conformity to the projected outline or shape of the coupling member which the indentation is to accept and having an interior surface (47) shaped generally complementary to the shape of the coupling member so that when the indentation (46) is operatively stretched about the coupling member (28) the interior surface closely surrounds the coupling member (28) and the edge of the opening of the indentation closely encircles the coupling member; the stretched body being constructed to act directly against the teeth and the coupling member portions in said biassing of the teeth.

2. An appliance as defined in Claim 1, wherein said arcuate-shaped portion defines two opposite sides, the recess is a first recess (24) for receiving teeth of one dental arch and is defined in one side of said arcuate-shaped portion side and said arcuate-shaped portion defines in its other side a second recess (26) for receiving teeth of the other dental arch of the patient, said second recess having walls defining teeth-engaging surfaces (48) shaped generally complementary to the surfaces of the teeth of said other dental arch so that when said appliance body is operatively positioned within the mouth, the teeth in each of the patient's dental arches (U,L) are closely received by one of the first and second recesses.

3. An appliance as defined in Claim 2, wherein said body includes a mid-portion (32) spacing the walls of the first and second recesses from one another so that when the appliance body is operatively positioned within the mouth, the teeth in the patient's dental arches are positioned in an open bite relationship with one another.

4. An appliance as defined in Claim 3, wherein said mid-portion defines at least one opening (51) therethrough to facilitate breathing through the mouth when the appliance is operatively positioned within the patient's mouth.

5. An appliance as defined in any preceding claim wherein the elastomer base material is a silicone elastomer composition which, when in an uncured condition, possesses a sufficiently low viscosity so that said appliance can be formed in a low pressure injection molding process and which, when in a cured condition, possesses a relatively high resistance to tear and an inherent strength for urging preselected ones of the teeth towards a predetermined orientation, wherein the appliance forces for acting upon the teeth are within orthodontically acceptable force levels.

6. An appliance as defined in Claim 5, wherein the silicone elastomer composition is a medical grade silicone rubber, which is liquid when uncured.

7. An appliance as defined in any of Claims 1 to 5, wherein the body (22) is a cured low pressure injection molding, the elastomer base material being a medical grade silicone rubber.

8. An appliance as defined in Claim 7, wherein the medical grade silicone rubber is liquid when uncured.

9. An appliance as defined in any of Claims 5 to 8, wherein said elastomer includes a platinum catalyst.

10. An appliance as defined in any of Claims 5 to 9, wherein said elastomer includes two parts mixed in appropriate portions and cured by the application of heat.

11. An appliance as defined in any of Claims 5 to 8, wherein said elastomer includes a mixture of triorganosiloxy endblocked polydimethylsiloxane fluid, a reinforcing amorphous silica and a fluid organohydrogensiloxane and a platinum catalyst.

12. A method of constructing an orthodontic positioner (20) for maloccluded teeth located in a preselected one of the upper and lower dental arches (U,L) of a patient for coaction with teeth-mounted coupling member (28), said method comprising the steps of:

providing a hardened dental facsimile (88) formed from an impression of the preselected dental arch wherein the dental facsimile includes portions simulating the teeth (T) and a portion of the gum tissue (G) adjacent the teeth of the preselected dental arch and the surfaces of the coupling members are defined by the surfaces of either coupling member-simulating portions of the facsimile formed by the impression or coupling members attached to the teeth-simulating portions of the facsimile;

repositioning teeth-simulating portions of the dental facsimile to a preselected orientation so as to provide a first model of the preselected dental arch having teeth-simulating portions orientated in the same manner as the teeth in the preselected arch are desired to be orientated;

forming the positioner out of an elastomer base material so that said positioner assumes a one-piece body having an arcuate-shaped portion along which is defined a recess (24,26) having walls defining (43,40) teeth-engaging surfaces (44,48) for receiving the teeth-simulating portions of said first model and a series of indentations (46) formed in the material of the body and disposed across

EP 0 290 248 B1

respective teeth-engaging surfaces, each indentation being in the form of an open-sided or cuplike cavity having an opening shaped generally in conformity to the projected outline or shape of the coupling member which the indentation is to accept and having an interior surface (47) shaped generally complementary to the shape of the coupling member so that when the indentation (46) is operatively stretched about the coupling member the interior surface closely surrounds the coupling member (28) and the edge of the opening of the indentation closely encircles the coupling member.

13. A method as described in Claim 12, wherein said step of providing a dental facsimile is preceded by the steps of:

providing an amount of uncured impression material suitable for accurately capturing the shape of the patient's teeth and of the coupling members when applied thereto and which, when cured, possesses a degree of flexibility;

selectively applying said amount of impression material to the preselected arch or a model thereof so that said impression material generally conforms to the shape of the teeth of the preselected dental arch, coupling members and a portion of the gum tissue adjacent the teeth;

permitting said amount of impression material to cure so that an enduring impression of the teeth, coupling members and gum tissue of the preselected dental arch is formed in one side of said first amount;

removing the enduring impression from the preselected dental arch or a model thereof;

providing an amount of high strength die stone in an uncured condition and filling the enduring impression with said amount of die stone; and

permitting said amount of die stone to cure to thereby provide the hardened dental facsimile of the teeth, coupling members and a portion of the gum tissue of the preselected dental arch; and

removing said enduring impression from said hardened facsimile.

14. A method as defined in Claim 13, wherein said teeth of said preselected dental arch are absent the coupling members prior to the forming of said enduring impression and said step of applying said amount of impression material is preceded by the steps of:

making a dental cast of the preselected dental arch;

forming a hardened model of the preselected dental arch with said dental cast; and

operatively positioning the coupling members upon the teeth of said hardened model.

15. A method as defined in any of the Claims 12 to 14, wherein said step of forming the positioner is followed by the steps of:

removing the coupling members from the hardened facsimile; and

operatively attaching the coupling members to the teeth of preselected dental arch in the patient's mouth in the same position in relationship to the teeth that the coupling members assumed when positioned upon the teeth of said hardened model.

16. A method as defined in any of Claims 12 to 15, wherein said step of repositioning teeth-simulating portions of the dental facsimile is followed by the steps of:

providing a relatively rigid liner for coacting with the coupling member in a male/female coupling arrangement;

operatively positioning the liner about the surfaces of the defined coupling members;

operatively positioning the liner so that the subsequent step of forming the positioner includes a step of shaping the elastomer base material about the liner so that the defined indentation of the positioner body is effectively lined by the liner.

17. A method as defined in Claim 16, wherein said liner has integral retention wings and the step of shaping the elastomer base material embeds the integral retention wings within the base material to effectively secure the liner within the positioner body.

18. A method as defined in any of claims 12 to 17 comprising forming the positioner out of silicone elastomer composition which, when in an uncured condition, possesses a sufficiently low viscosity so that said positioner can be formed in a low pressure injection molding process and which, when in a cured condition, possesses a relatively high resistance to tear and an inherent strength for urging preselected ones of the teeth towards a predetermined orientation, wherein the positioner forces for acting upon the teeth are within orthodontically acceptable force levels.

14

**Patentansprüche**

1. Orthodontische Positionierungsanlage für schlecht stehende Zähne, an denen funktionsfähig solche Kupplungsteile (21) befestigt sind, die Von den Oberflächen der Zähne vorstehende Teile enthalten, wobei diese Positionierungsanlage aufweist:

   einen Körper (22), der aus einem elastomeren Ausgangsmaterial hergestellt ist und einen bogenförmigen Teil aufweist, längs dem eine Ausnehmung (24, 26) gebildet ist, um die Zähne eines Zahnbogens (U, L) des Patienten aufzunehmen,

   wobei diese Zähne schlecht stehende Zähne enthalten, an denen Kupplungsteile (21) der oben genannten Art befestigt werden und wobei

   die Ausnehmung Wände (43, 49) hat, die mit den Zähnen zusammenwirkende Flächen (44, 48) bilden, die im großen und ganzen komplementär zu den Oberflächen der Zähne des einen Bogens geformt sind, wenn dessen schlechtstehende Zähne in eine vorbestimmte Ausrichtung gebracht sind, und Kupplungselemente (46), die jeweils so geformt sind, daß sie ein entsprechendes vorstehendes Kupplungsteil (28) aufnehmen, wenn sie dazu entsprechend angeordnet sind, so daß, wenn der Körper der Positionierungsanlage funktionsfähig im Mund des Patienten angeordnet ist und um die Zähne des einen Zahnbogens so gespannt ist, daß dessen Zähne von der Ausnehmung des bogenförmigen Teils aufgenommen sind und jedes vorstehende Kupplungsteil von einem entsprechenden Kupplungselement aufgenommen ist, der gespannte Körper die Zähne des einen Bogens zur vorbestimmten Ausrichtung hin in Vorspannung setzt,

   **dadurch gekennzeichnet, daß**

   der Körper (22) einstückig ausgebildet ist;

   die Kupplungselemente (46) die Form der jeweiligen Eindrückung in den Körper annehmen, wobei

   jede Eindrückung die Form einer offenseitigen oder tassenartigen Aushöhlung hat mit einer Öffnung, die im großen und ganzen in Anpassung an die vorstehende Kontur oder die Form des Kupplungsteils, das die Eindrückung aufzunehmen hat, geformt ist, und eine innere Oberfläche (47) hat, die im großen und ganzen komplementär zu der Form des Kupplungsteils geformt ist, so daß, wenn die Eindrückung (46) funktionsfähig um das Kupplungsteil (28) gespannt ist, die innere Oberfläche das Kupplungsteil (28) eng umgibt und die Kante der Öffnung der Eindrückung das Kupplungsteil (28) eng umschließt; und daß

   der gespannte Körper so ausgebildet ist, daß er bei diesem Vorspannen der Zähne direkt gegen die Zähne und die Kupplungsteile wirkt.

2. Positionierungsanlage nach Anspruch 1, dadurch gekennzeichnet, daß der bogenförmige Teil zwei sich gegenüberliegende Seiten bildet;

   die Ausnehmung eine erste Ausnehmung (24) zur Aufnahme von Zähnen eines Zahnbogens ist und in einer der Seiten des bogenförmigen Teils gebildet ist; und daß

   dieser bogenförmige Teil auf seiner anderen Seite eine zweite Ausnehmung (26) zur Aufnahme von Zähnen des anderen Zahnbogens des Patienten bildet, wobei die zweite Ausnehmung Wände hat, die auf die Zähne wirkende Flächen (48) bilden, die im wesentlichen komplementär zu den Oberflächen der Zähne des anderen Zahnbogens geformt sind, so daß, wenn der Körper der Positionieranlage funktionsfähig im Mund angeordnet ist, die Zähne in jedem Zahnbogen (U, L) des Patienten durch die erste oder die zweite Ausnehmung eng anliegend aufgenomen werden.

3. Positionierungsanlage nach Anspruch 2, dadurch gekennzeichnet, daß der Körper einen mittleren Teil (32) enthält, der die Wände der ersten und zweiten Ausnehmung im Abstand voneinander hält, so daß, wenn der Positionierungsanlagenkörper funktionsfähig im Mund angeordnet ist, die Zähne in den Zahnbögen des Patienten in einer Offenen-Biß-Beziehung zueinander angeordnet sind.

4. Positionierungsanlage nach Anspruch 3, dadurch gekennzeichnet, daß dieser mittlere Teil mindestens eine Öffnung (51) begrenzt, durch die das Atmen durch den Mund erleichtert wird, wenn die Positionierungsanlage funktionsfähig im Mund des Patienten angeordnet ist.

5. Positionierungsanlage nach einem der vorhergehenden Ansprüche, dadurch gekennzeichnet, daß

   das elastomere Grundmaterial eine Silikonelastomerverbindung ist, die in einem unausgehärteten Zustand eine ausreichend geringe Viskosität hat, so daß die Positionierungsanlage in einem Niederdruckspritzgußverfahren geformt werden kann; und

   die in einem ausgehärteten Zustand eine relativ hohe Widerstandskraft gegen Zerreißen und eine

EP 0 290 248 B1

inhärente Kraft zum Drücken ausgewählter Zähne auf eine vorbestimmte Ausrichtung hin besitzt, wobei die Kräfte der Positionierungsanlage zum Wirken auf die Zähne innerhalb orthodontisch akzeptabler Kraftbereiche liegen.

6. Positionierungsanlage nach Anspruch 5, dadurch gekennzeichnet, daß die Silikonelastomerverbindung ein im unausgehärteten Zustand flüssiger für medizinische Zwecke geeigneter Silikongummi ist.

7. Positionierungsanlage nach einem der Ansprüche 1 bis 5, dadurch gekennzeichnet, daß der Körper (22) ein ausgehärteter Niederdruckspritzguß ist, wobei das elastomere Ausgangsmaterial ein für medizinische Zwecke geeigneter Silikongummi ist.

8. Positionierungsanlage nach Anspruch 7, dadurch gekennzeichnet, daß der für medizinische Zwecke geeignete Silikongummi im unausgehärteten Zustand flüssig ist.

9. Positionierungsanlage nach einem der Ansprüche 5 bis 8, dadurch gekennzeichnet, daß das Elastomer einen Platinkatalysator enthält.

10. Positionierungsanlage nach einem der Ansprüche 5 bis 9, dadurch gekennzeichnet, daß das Elastomer zwei in geeignetem Verhältnis gemischte Teile enthält und durch Anwendung von Wärme aushärtet.

11. Positionierungsanlage nach einem der Ansprüche 5 bis 8, dadurch gekennzeichnet, daß das Elastomer eine Mischung aus einer mit Triorganosiloxy endblockierten Polydimethylsiloxan-Flüssigkeit, einem versteifenden amorphen Silika und einem flüssigen Organohydrogensiloxan und einem Platinkatalysator enthält.

12. Verfahren zum Herstellen einer orthodontischen Positionierungsanlage (20) für entweder im oberen oder im unteren Zahnbogen (U, L) eines Patienten angeordnete schlecht stehende Zähne zum Zusammenwirken mit an den Zähnen befestigten Kupplungsteilen (28), das folgende Schritte aufweist:
Schaffen einer aus einem Abdruck des ausgewählten Zahnbogens geformten, ausgehärteten Zahnreproduktion (88), wobei die Zahnreproduktion Teile enthält, die die Zähne simulieren und einen Teil, des an die Zähne des ausgewählten Zahnbogens angrenzenden Zahnfleisches (G), und die Oberflächen der Kupplungsteile von den Oberflächen von kupplungsteil-simulierenden Teilen der aus dem Abdruck geformten Reproduktion oder von Kupplungsteilen gebildet werden, die an den die Zähne simulierenden Teilen der Reproduktion befestigt sind;
Neupositionieren der die Zähne simulierenden Teile der Zahnreproduktion in einer vorbestimmten Ausrichtung, um ein erstes Modell des vorbestimmten Zahnbogens mit die Zähne simulierenden Teilen zu schaffen, die in der gleichen Art und Weise ausgerichtet sind wie die Zähne in dem ausgewählten Bogen wünschenswerterweise ausgerichtet werden sollen;
Formen einer Positionierungsanlage aus einem elastomeren Ausgangsmaterial, so daß die Positionierungsanlage aus einem einstückigen Körper besteht, der einen bogenförmigen Teil hat, längs dem eine Ausnehmung (24, 26) mit Wänden (43, 40) gebildet ist, die mit den Zähnen zusammenwirkende Flächen (44, 48) bilden zur Aufnahme der die Zähne simulierenden Teile des ersten Modells und eine Anzahl von Eindrückungen (46) , die in dem Material des Körpers gebildet wurden und quer zu den mit den Zähnen zusammenwirkenden Flächen angeordnet sind, wobei jede Eindrückung die Form einer an einer Seite offenen oder tassenförmigen Aushöhlung hat, die eine Öffnung aufweist, die im großen und ganzen in Anpassung an die vorstehende Kontur oder Form des Kupplungsteils, das die Eindrückung aufzunehmen hat, geformt ist und eine innere Oberfläche (47) aufweist, die im großen und ganzen komplementär zu der Form des Kupplungsteils geformt ist, so daß, wenn die Eindrückung (46) funktionsfähig um das Kupplungsteil (28) gespannt ist, die innere Oberfläche das Kupplungsteil (28) eng umgibt und die Kante der Öffnung der Eindrückung das Kupplungsteil eng umschließt.

13. Verfahren nach Anspruch 12, dadurch gekennzeichnet, daß dem Schritt des Schaffens einer Zahnreproduktion folgende Schritte vorausgehen:
Bereitstellen einer Menge an unausgehärtetem Abdruckmaterial, das geeignet ist, die Form der Zähne des Patienten und der Kupplungsteile, wenn es darauf aufgebracht wird, genau anzunehmen und wenn es ausgehärtet ist noch ein gewisses Maß an Flexibilität besitzt;
selektives Aufbringen dieser Menge an Abdruckmaterial auf einen ausgewählten Zahnbogen oder ein Modell davon, so daß das Abdruckmaterial sich im großen und ganzen an die Form der Zähne des

16

EP 0 290 248 B1

ausgewählten Zahnbogens, die Kupplungsteile und an einen Teil des an die Zähne angrenzenden Zahnfleischs anpaßt;

Aushärtenlassen der Menge des Abdruckmaterials, so daß ein bleibender Abdruck der Zähne, der Kupplungsteile und des Zahnfleischs des ausgewählten Zahnbogens in eine Seite der ersten Menge geformt ist;

Entfernen des bleibenden Abdrucks von dem ausgewählten Zahnbogen oder einem Modell davon;

Bereitstellen einer Menge an sehr fester Stempelmasse in unausgehärtetem Zustand und Befüllen des bleibenden Abdrucks mit dieser Menge Stempelmasse; und

Aushärtenlassen dieser Menge Stempelmasse, um dabei die ausgehärtete Reproduktion der Zähne, der Kupplungsteile und eines Teils des Zahnfleischs des ausgewählten Zahnbogens zu schaffen; und

Entfernen des bleibenden Abdrucks von der ausgehärteten Reproduktion.

14. Verfahren nach Anspruch 13, dadurch gekennzeichnet, daß die Zähne des ausgewählten Zahnbogens vor dem Formen des bleibenden Abdrucks von den Kupplungsteilen entfernt werden und dem Schritt des Aufbringens der Menge an Abdruckmaterial folgende Schritte vorausgehen:

Herstellen eines Zahnabgusses des ausgewählten Zahnbogens;

Formen eines ausgehärteten Modells des ausgewählten Zahnbogens mit dem Zahnabguß; und

funktionsfähiges Anbringen der Kupplungsteile auf den Zähnen des ausgehärteten Modells.

15. Verfahren nach einem der Ansprüche 12 bis 14, dadurch gekennzeichnet, daß dem Schritt des Formens der Positionierungsanlage die folgenden Schritte folgen:

Entfernen der Kupplungsteile von der ausgehärteten Reproduktion; und

funktionsfähiges Anbringen der Kupplungsteile an den Zähnen des ausgewählten Zahnbogens im Mund des Patienten in derselben Lage relativ zu den Zähnen, die die Kupplungsteile harten, als sie auf den Zähnen des ausgehärteten Modells angeordnet waren.

16. Verfahren nach einem der Ansprüche 12 bis 15, dadurch gekennzeichnet, daß dem Schritt des Neupositionierens der die Zähne simulierenden Teile der Zahnreproduktion die folgenden Schritte folgen:

Schaffen einer relativ steifen Einlage zum Zusammenwirken mit den Kupplungsteilen in einer ineinandergreifenden Kupplungsanordnung;

funktionsfähiges Positionieren der Einlage um die Oberflächen der genau bestimmten Kupplungsteile;

funktionsfähiges Positionieren der Einlage, so daß die nachfolgenden Schritte des Formens der Positionierungsanlage einen Schritt enthalten, in dem das elastomere Ausgangsmaterial um die Einlage so geformt wird, daß die genau bestimmte Eindrückung des Körpers der Positionierungsanlage wirksam durch die Einlage unterlegt wird.

17. Verfahren nach Anspruch 16, dadurch gekennzeichnet, daß die Einlage integrierte Rückhalteflügel aufweist und der Schritt des Formens des elastomeren Ausgangsmaterials die integrierten Rückhalteflügel in das Ausgangsmaterial einbettet, um die Einlage wirksam im Körper der Positionierungsanlage zu befestigen.

18. Verfahren nach einem der Ansprüche 12 bis 17, dadurch gekennzeichnet, daß die Positionierungsanlage aus einer Silikonelastomerverbindung geformt wird, die in einem unausgehärteten Zustand eine ausreichend geringe Viskosität hat, so daß die Positionierungsanlage in einem Niederdruckspritzgußverfahren geformt werden kann, und die in einem ausgehärteten Zustand eine relativ hohe Widerstandskraft gegen Zerreißen und eine inhärente Kraft zum Drücken ausgewählter Zähne auf eine vorbestimmte Ausrichtung hin besitzt, wobei die Kräfte der Positionierungsanlage zum Wirken auf die Zähne innerhalb orthodontisch akzeptabler Kraftbereiche liegen.

**Revendications**

1. Appareil orthodontique (20) pour dents mal orientées auxquelles sont fixés fonctionnellement des éléments de liaison (21) du type comportant des parties en saillie par rapport aux surfaces des dents, ledit appareil comprenant un corps (22) en matière de base de type élastomère ayant une partie en arc

17

le long de laquelle est défini un évidement (24,26) de réception des dents (T) d'un arc dentaire (U,L ) du patient, lesdites dents comprenant des dents mal orientées auxquelles sont fixés des éléments de liaison (21) du type précité, l'évidement ayant des parois (43,49) qui définissent des surfaces d'engagement de dents (44,48) de forme sensiblement complémentaire des surfaces des dents dudit un arc lorsque ses dents mal orientées sont positionnées dans une orientation prédéterminée, et comportant des éléments de liaison (46) configurés chacun pour recevoir un élément de liaison en saillie correspondant (28) lorsqu'ils sont placés à proximité de sorte que, lorsque ledit corps de l'appareil est fonctionnellement positionné dans la bouche du patient et étiré autour des dents du dit un arc dentaire afin que les dents de celui-ci soient reçues par l'évidement de ladite partie en arc et que chaque partie d'élément de liaison en saillie soit reçue par un élément de liaison correspondant, le corps étiré agit pour solliciter les dents dudit un arc vers l'orientation prédéterminée ;

caractérisé en ce que :

le corps (22) est en une seule pièce ;

les éléments de liaison (46) sont sous la forme d'indentations respectives ménagées dans le corps, chaque indentation étant sous la forme d'une cavité ouverte sur un côté ou en forme de tasse ayant une ouverture dont la forme est sensiblement la même que le contour projeté ou la forme de l'élément de liaison que l'indentation doit accepter et ayant une surface intérieure (47) de forme sensiblement complémentaire de la forme de l'élément de liaison de sorte que,lorsque l'indentation (46) est fonctionnellement étirée autour de l'élément de liaison (28), la surface intérieure entoure étroitement l'élément de liaison (28) et le bord de l'ouverture de l'indentation encercle étroitement l'élément de liaison ; et

le corps étiré est construit pour agir directement contre les dents et les parties d'éléments de liaison, dans ladite sollicitation des dents.

2. Appareil suivant la revendication 1,
dans lequel ladite partie en arc définit deux côtés opposés, l'évidement est un premier évidement (24) pour recevoir les dents d'un premier arc dentaire et il est défini dans un premier côté de ladite partie en arc, et la dite partie en arc définit dans son autre côté un deuxième évidement (26) pour recevoir les dents de l'autre arc dentaire du patient, ledit deuxième évidement ayant des parois qui définissent des surfaces d'engagement de dents (48) de forme sensiblement complémentaire des surfaces des dents dudit autre arc dentaire de sorte que, lorsque ledit corps d'appareil est fonctionnellement positionné dans la bouche, les dents de chacun des arcs dentaires (U, L) du patient sont étroitement reçus par un des premier et deuxième évidements.

3. Appareil suivant la revendication 2,
dans lequel ledit corps comprend une partie intermédiaire (32) espaçant les parois des premier et deuxième évidements l'une de l'autre de sorte que,lorsque le corps d'appareil est fonctionnellement positionné dans la bouche, les dents des arcs dentaires du patient sont placées en relation mutuelle de morsure ouverte.

4. Appareil suivant la revendication 3,
dans lequel ladite partie intermédiaire définit au moins une ouverture traversante (51) pour faciliter la respiration par la bouche lorsque l'appareil est en position de fonctionnement dans la bouche du patient.

5. Appareil suivant une quelconque des revendications précédentes, dans lequel la matière de base de type élastomère est une composition élastomère de silicone qui possède, à l'état non durci, une viscosité suffisamment faible pour qu'on puisse former ledit appareil par moulage par injection à basse pression, et qui possède, à l'état durci, une résistance à la déchirure relativement élevée et une résistance mécanique inhérente pour solliciter des dents prédéterminées vers une orientation prédéterminée, de sorte que les forces de l'appareil qui agissent sur les dents sont dans des limites de force orthodontiquement acceptables.

6. Appareil suivant la revendication 5,
dans lequel la composition élastomère de silicone est un caoutchouc de silicone de qualité médicale, qui est liquide à l'état non durci.

7. Appareil suivant une quelconque des revendications 1 à 5, dans lequel le corps (22) est une pièce moulée par injection à basse pression et durcie, la matière de base élastomère étant un caoutchouc silicone de qualité médicale.

8. Appareil suivant la revendication 7,
dans lequel le caoutchouc de silicone de qualité médicale est liquide avant durcissement.

9. Appareil suivant une quelconque de revendications 5 à 8, dans lequel ledit élastomère contient un catalyseur au platine.

10. Appareil suivant une quelconque des revendications 5 à 9, dans lequel ledit élastomère comprend deux parties mélangées en portions appropriées et durcies par application de chaleur.

11. Appareil suivant une quelconque des revendications 5 à 8, dans lequel ledit élastomère comprend un mélange d'un fluide de type polydiméthylsiloxane à extrémités bloquées de triorganosiloxy, une silice amorphe de renforcement,un organohydrogènesiloxane fluide et un catalyseur au platine.

12. Méthode de fabrication d'un positionneur orthodontique (20) pour dents mal orientées , placé dans un arc prédéterminé des arcs dentaires supérieur et inférieur (U,L) d'un patient pour coopération avec un élément de liaison monté sur dent (28), ladite méthode comprenant les étapes de :
préparation d'une reproduction dentaire durcie (88) formée à partir d'une empreinte de l'arc dentaire prédéterminé, de sorte que la reproduction dentaire comprend des parties simulant les dents (T) et une partie du tissu de gencive (G) adjacent aux dents de l'arc dentaire prédéterminé, et les surfaces des éléments de liaison sont définies par les surfaces des parties de simulation d'élément de liaison de la reproduction formée par l'empreinte, ou d' éléments de liaison fixés aux parties de simulation de dents de la reproduction ;
repositionnement des parties de simulation de dents de la reproduction dentaire à une orientation prédéterminée, de façon à obtenir un premier modèle de l'arc dentaire prédéterminé ayant des parties de simulation de dents orientées de la même manière que l'orientation désirée des dents de l'arc prédéterminé ; et
formation du positionneur à partir d'une matière de base élastomère de sorte que ledit positionneur comprenne un corps monobloc ayant une partie en arc le long de laquelle est défini un évidement (24,26) dont les parois définissent (43,40) des surfaces d'engagement de dents (44,48), pour recevoir les parties de simulation de dents dudit premier modèle,et une série d'indentations (46) formées dans la matière du corps et disposées en travers des surfaces d'engagement de dents respectives, chaque indentation étant sous la forme d'une cavité ayant un côté ouvert ou en forme de tasse dont l'ouverture se conforme sensiblement au contour projeté ou à la forme de l'élément de liaison que l'indentation doit accepter, et ayant une surface intérieure (47) de forme sensiblement complémentaire de la forme de l'élément de liaison de sorte que, lorsque l'indentation (46) est fonctionnellement étirée autour de l'élément de liaison, la surface intérieure entoure étroitement l'élément de liaison (28) et le bord de l'ouverture de l'indentation encercle étroitement l'élément de liaison.

13. Méthode suivant la revendication 12, dans laquelle ladite étape de préparation d'une reproduction dentaire est précédée par les étapes de :
préparation d'une quantité de matière d'impression non durcie convenant pour la reproduction précise de la forme des dents du patient et des éléments de liaison, lorsqu'on l'applique aux dents, et qui possède, lorsqu'elle est durcie, une certaine souplesse ;
application sélective de ladite quantité de matière d'impression à l'arc prédéterminé ou à un modèle de celui-ci, de sorte que ladite matière d'impression se conforme sensiblement à la forme des dents de l'arc dentaire prédéterminé,des éléments de liaison et d'une partie du tissu de gencive adjacent aux dents ;
attente du durcissement de ladite quantité de matière d'impression , de sorte qu'une empreinte durable des dents, des éléments de liaison et du tissu de gencive de l'arc dentaire prédéterminé est engendrée dans un côté de ladite première quantité ;
enlèvement de l'empreinte durable de l'arc dentaire prédéterminé ou de son modèle ;
préparation d'une certaine quantité de matière de moulage de haute résistance, dans un état non durci, et remplissage de l'empreinte durable avec ladite quantité de matière de moulage ;
attente du durcissement de ladite quantité de matière de moulage de façon à obtenir la reproduction dentaire durcie des dents, des éléments de liaison et d'une partie du tissu de gencive de l'arc dentaire prédéterminé; et

enlèvement de ladite empreinte durable de la dite reproduction durcie.

**14.** Méthode suivant la revendication 13,

dans laquelle lesdites dents dudit arc dentaire prédéterminé ne sont pas pourvues des éléments de liaison avant de former ladite empreinte durable, et ladite étape d'application de ladite quantité de matière d'impression est précédée par les étapes de :

préparation d'un plâtre dentaire de l'arc dentaire prédéterminé ;

formation d'un modèle durci de l'arc dentaire prédéterminé, au moyen dudit plâtre dentaire ; et

mise en place fonctionnelle des éléments de liaison sur les dents dudit modèle durci.

**15.** Méthode suivant une quelconque des revendications 12 à 14, dans laquelle ladite étape de formation du positionneur est suivie par les étapes de :

enlèvement des éléments de liaison de la reproduction durcie ; et

fixation fonctionnelle des éléments de liaison aux dents de l'arc dentaire prédéterminé dans la bouche du patient, à la même position, par rapport aux dents, que les éléments de liaison ont pris lorsqu'ils ont été placés sur les dents dudit modèle durci.

**16.** Méthode suivant une quelconque des revendications 12 à 15, dans laquelle ladite étape de repositionnement des parties de simulation de dents de la reproduction dentaire est suivie par les étapes de :

préparation d'un revêtement relativement rigide pour coopérer avec l'élément de liaison par accouplement mâle/femelle ;

positionnement fonctionnel du revêtement au-tour des surfaces des éléments de liaison définis ; et

positionnement fonctionnel du revêtement de sorte que l'étape subséquente de formation du positionneur comprenne une étape de mise en forme de la matière de base élastomère autour du revêtement afin que l'indentation définie du corps de positionneur soit effectivement revêtue par le revêtement.

**17.** Méthode suivant la revendication 16, dans laquelle ledit revêtement comporte des ailes de retenue solidaires et l'étape de mise en forme de la matière de base élastomère encastre les ailes de retenue solidaires dans la matière de base afin de fixer efficacement le revêtement dans le corps de positionneur.

**18.** Méthode suivant une quelconque des revendications 12 à 17, comprenant la formation du positionneur à partir d'une composition d'élastomère de type silicone qui possède, dans un état non durci, une viscosité suffisamment faible pour que ledit positionneur puisse être formé par moulage par injection à basse pression, et qui possède, dans un état durci, une résistance à la déchirure relativement élevée et une résistance inhérente pour solliciter des dents prédéterminées vers une orientation prédéterminée, les forces exercées par le positionneur sur les dents étant dans des limites de forces orthodontique-ment acceptables.

Fig. 1.

Fig. 2.

Fig. 3.

Fig. 4.

Fig. 5a.

Fig. 5b.

Fig. 6.

Fig. 7.

Fig. 8.

Fig. 9.

Fig. 10.

Fig. 23.

Fig.11.

Fig.14.

Fig.12.

Fig.15.

Fig.13.

Fig.16.

Fig. 17.

Fig. 20.

Fig. 18.

Fig. 21.

Fig. 19.

Fig. 22.

Fig. 27.

194

192

28

Fig. 24.

184

K

186

Fig. 28.

L

194

Fig. 25.

L

28

L

190

28

Fig. 26.